# EUROPEAN PATENT APPLICATION

(11) **EP 1 688 174 A1**
(43) Date of publication of application: **09.08.2006**
(21) Application number: 05075306.0
(22) Date of filing: 07.02.2005
(51) Int. Cl.: B01D 61/18, B01D 61/20, B01D 65/08, C02F 3/12, C02F 1/44

(54) **Membrane filtration tank and process for filtering a liquid**

(71) Applicant: DHV Water B.V., NL-3818 EX Amersfoort (NL)
(72) Inventor: Van der Roest, Helle Frans, 3828 XJ Hoogland (NL); Lawrence, Darren Paul, 3882 LP Putten (NL)
(74) Representative: van Westenbrugge, Andries

(57) **Abstract**

The invention provides a membrane filtration tank with one or more filtration membranes connected to an effluent pipe, one or more sludge distribution pipes having one or more openings to provide liquid to the tank, an overflow channel for collecting liquid from the tank and a floor having a slope. The invention further provides a process for filtering a liquid by feeding the liquid to be filtered to the membrane filtration tank, b)withdrawing permeate from the one ore more submerged filtration membranes, and c) removing at least part of the liquid means of overflow into an overflow channel.

## Description

### Field of invention

The invention is related to a membrane filtration tank and to a process for filtering a liquid.

### Background of invention

Submerged membranes are used for treating a liquid containing solid material to produce a filtered liquid lean in or free from solids and an unfiltered retentate rich in solids. For example, submerged membranes are used to withdraw substantially clean water from wastewater and to withdraw potable water from water from a lake or reservoir. The membranes are generally arranged in modules or units which comprise of membranes and headers attached to the membranes. The modules are immersed in a tank containing water and solids. Usually, a transmembrane pressure is applied across the membrane's wall, which causes water to permeate through the membrane surface. Solids do not permeate through the membranes and remain in the tank. These solids are eventually purged from the tank or periodically drained.

Membrane filtration tanks and processes wherein these tanks are used are e.g. described in EP1452493. Therein it is described that during permeation, the membranes reject solids which remain in the tank water. The solids can be removed by removing a portion of the tank water by opening a drain valve in a drain conduit at the bottom of the tank. US6027649 e.g. describes that impure water is introduced in a tank and purified water or permeate is removed from the membrane. A portion of the untreated water along with excess flock is withdrawn from the reaction tank along a line, close to the bottom of the tank.

A disadvantage of these systems and these processes of the prior art is that under process conditions the turbulency in the system is relatively small and the sludge concentration is substantially not uniform over the liquid in the tank. Further, dead zones are formed in such tanks and an uneven distribution of contaminants is found to occur on the membranes. This leads to a less efficient filtration process of the liquid in the tank.

Hence, it is an object of this invention to provide a membrane filtration tank and to provide a process for filtering a liquid which enable and provide, respectively, a good turbulency in the liquid in the tank and a substantially even distribution or concentration of the sludge in the tank.

### Summary of the invention

According to a first aspect of the invention, there is provided a membrane filtration tank comprising:
a) one or more filtration membranes connected to an effluent pipe;
b) one or more sludge distribution pipes having one or more openings to provide liquid to the tank;
c) one or more overflow channels for collecting liquid from the tank;
d) a floor having a slope.

According to a next aspect of the invention, there is provided a process for filtering a liquid comprising:
a) feeding the liquid to be filtered to a membrane filtration tank according to the invention;
b) withdrawing permeate from the one or more submerged filtration membranes;
c) removing at least part of the liquid by means of overflow into one or more overflow channels.

### Brief description of drawings

Figure 1 schematically depicts in a front view an embodiment of the membrane filtration tank according to the invention.
Figure 2 schematically depicts in a top view an embodiment of the membrane filtration tank according to the invention as depicted in figure 1.
Figure 3 schematically depicts in a front/side view an embodiment of the membrane filtration tank according to the invention as depicted in figures 1 and 2.

### Detailed description

The membranes or membrane modules to be used are so-called submerged filtration membranes, which are during operation submerged in the liquid to be purified. Submerged filtration membranes are known from the art, e.g. flat plate submerged membranes, hollow fibre submerged membranes, capillary membranes etc., having pore sizes in the order of 0.003-10 µm. Suppliers of such membranes are e.g. Kubota, Mitshubishi, Norit Membrane Technology, Seghers-Toray, Zenon etc. Such membranes can e.g. be applied in membrane bioreactors (MBR). MBR technology is based on the combination of an activated sludge process and a membrane filtration in one treatment step. The separation of activated sludge and effluent takes place using membranes, where all suspended material is removed from the water. The biological process of MBR is comparable to the conventional activated sludge process, where good treatment results and flexibility are maintained. MBR can be applied in municipal and industrial wastewater purification processes. Hence, the process for purification according to the invention can be applied in a municipal or industrial wastewater purification process. The process for purification according to the invention may however also be used for the production of drinking water, e.g. the liquid to be treated may also be e.g. water from a lake or a reservoir.

The membrane filtration tank according to the invention is preferably between about 2.5-6 m wide, more preferably between about 3-4 m wide, preferably between about 2.5-20 m long, more preferably between about 3-15 long, and preferably 2-5 m high, more preferably between about 3-4 m high. Height and length of tank are e.g. dependent on the type of application. Industrial systems will usually comprise smaller tanks (e.g. 3mWx3mLx3mH), whereas municipal systems may comprise larger tanks (e.g. 4mWx12mLx3.5mH). The optimum size for each application can be determined by HRT and turbulence pattern. The tank can be built from stainless steel, concrete, HD plastics or coated carbon steel, materials known to the person skilled in the art. Preferably, stainless steel is used for smaller sized tanks (industrial applications) and concrete for larger sized tanks (municipal systems).

Usually, the membranes are provided in modules, comprising an integrated gas-dispersing device for cleaning the membranes. The gas-dispersing device for providing a gas in the liquid can be a means as e.g. described in EP0605826 or EP1452493. It can be a gas-dispersing device below at least part of the filtration membrane surface comprising an aerator with apertures or holes between 1 and 20 mm, more preferably holes with a diameter between 5 and 10 mm. Basically, the gas-dispersing device comprises a hollow body like a channel, which may be flat, rectangular, round, etc., comprising a circumferential surface with a number of apertures having diameters between about 1 and 20 mm. The apertures may be distributed over the circumferential surface, but will usually be distributed preferentially on the part of the circumferential surface that, when in use, is directed to the membrane (unit) in the tank.

The gas-dispersing device will usually be placed below at least part of the filtration membrane surface. In an embodiment, the gas-dispersing device is an integral part of the filtration membrane module or unit, as is often the case for commercially available membrane modules. The gas-dispersing device may also be arranged next to the filtration membrane, e.g. at half height of the membrane (unit) or partly next to the filtration membrane, or staggered with respect to the membrane module or unit. Herein, "membrane surface" comprises the surface of the membrane(s) or membrane unit, membrane module or membrane cassette that is directed to the liquid, and which is usually substantially vertical (sometimes with some degree of freedom, e.g. membranes with a small degree of slack). Unlike prior art gas-dispersing devices or aerators, the gas-dispersing device of the present invention has at least two inlets, although more inlets may be present. Filtration membranes may be rectangular. Filtration membranes are usually comprised in units which are rectangular. Herein, the term "membrane" also refers to membrane unit, module or cassette. The gas-dispersing device may also have a structure with a longer length than width. In a preferred embodiment, the first inlet and the second inlet are arranged on opposite sides of the gas-dispersing device, especially at the opposite sides in the direction of the length (i.e. at the end sides of the channel, or at the end sides of the main channel of the gas-dispersing device). This does not necessarily imply that the inlets have to be present at the edges; they may also be present close to the edges. In another embodiment, the first and second inlets have a distance of each other, calculated from the centres of the inlets to the gas-dispersing device, of at least about 50-80 % of the length of the gas-dispersing device. Preferably, this distance is at least about 80-90% of the length. An advantage of the invention is that state of the art gas-dispersing devices may be used, or, whereby, when necessary, only a second inlet and/or a second tube (connecting the second inlet and a gas source like a blower) may have to be provided. When the gas-dispersing device is purged with gas, the second (or first) inlet may also be used as outlet.

The gas-dispersing device receives gas from a gas source. This source may be a know source, providing air, nitrogen and/or other, preferably, inert gasses, or combinations thereof. Preferably, air is used. The gas is provided to the first inlet, or to the second inlet or to both first and second inlets. The gas is provided to the inlet(s) in a pulsed way, preferably according to European Patent application 04077971.2, which is incorporated by reference.

The submerged filtration membranes provide purified water and this purified water or permeate is pumped away with one or more effluent pipe(s) (permeate exhaust or discharge pipe(s)). Preferably, there is one central effluent pipe, connected to the individual membrane units with connecting pipes. In an embodiment, the tank of the invention is mounted on another tank or unit, comprising the process area (with one or more pumps for withdrawing the permeate, one or more pumps for providing the liquid to the tank, and one or more blowers for providing gas to the gas-dispersing devices). For example, the membrane filtration tank can be mounted on the process area, or adjusted to the process area. This modular concept allows for very compact large filtration devices. Further, in this embodiment the effluent pipe is preferably a substantially vertical pipe, preferably arranged in the middle of the tank, and preferably arranged close to one of the side walls.

Further, the tank comprises a single or double feed sludge distribution pipe, which is preferably designed to promote a completely mixed liquid in the filtration Tank. Preferably, this pipe has multi injection points sized on the minimum and maximum sludge flow rates required, e.g. between about 1- 20, like e.g. 2-12. Nozzles are preferably sized at about 0.5-4 m/s liquid outflow speed, more preferably between about 1-2 m/s; the distribution pipe is preferably sized at about 0.5-4 m/s liquid flow speed, more preferably between about 1-1.5 m/s. Preferably, the sludge distribution pipe comprises a number of equally spaced nozzles over the whole length of the pipe in the tank. For example, the pipe may comprise one or more, like 1-10, nozzles per meter pipe, the nozzles having a diameter of about 2-10 cm. Preferably, the at least one of the one ore more sludge distribution pipes, more preferably, the one or more openings of the at least one ore more sludge distribution pipes are located at a distance within ¼ of the width of the tank from one of the side walls of the tank.

The liquid to be purified can be biologically treated municipal waste water, industrial waste water or water from a lake or reservoir, etc, comprising e.g. natural organic matter, turbidity, cysts, bacteria, viruses, etc. The levels thereof can vary depending on the water source used. The solid matter content of the liquid to be purified is preferably between about 0.1 and 10 ppm.

The tank further comprises an overflow. Preferably this is a gutter or channel, preferably integrated in at least part of one or more of the side walls. The membrane filtration tank and the process of the invention are used in the overflow back principle, i.e. the liquid is pumped into the tank with the sludge distribution pipe, permeate is extracted via the effluent pipe, but the withdrawal of permeate volume is smaller than the added volume of sludge liquid. This creates an overflow of the tank, which is collected by the overflow channel. Assuming an inner perimeter of the tank made up of twice the inner width of the front an back side walls, and twice the inner length of both side walls, preferably at least 30% of the length of the perimeter comprises an overflow channel. In another preferred embodiment, at least 30% of two or more walls comprises an overflow channel. More preferably, the side wall opposite of the sludge distribution pipe comprises an overflow channel over at least 30 % of its total (inner length), even more preferably, at least 50 % of its length, most preferably the entire inner length of the opposite wall is provided with an overflow such that liquid of the tank flows over in this overflow channel. Hence, in a preferred embodiment, at least part of the wall opposite the sludge distribution pipe comprises an overflow channel, most preferably over the entire inner length of this wall. In an embodiment, at least part of the liquid may be removed by means of overflow in a semi-continuous or continuous way. Herein, the term "an overflow channel" refers to one or more overflow channels.

In another preferred embodiment, at least 50 % of the perimeter comprises an overflow channel. In yet another embodiment, at least two side walls comprise each at least 30% of their total length an overflow channel, more preferably, at least two side wall comprise overflow channels over their entire inner length (width). Hence, in another preferred embodiment, at least part of the wall located at a distance within ¼ of the width from the tank from the sludge distribution pipe comprises an overflow channel, most preferably over the entire inner length of this wall.

The overflow returns or channels may provide the overflow liquid back to a supply vessel via the overflow channels. The overflow channels advantageously may also act as flow baffles to increase tank turbulence. Preferably, two overflow channels are used, one comprised in the side wall closest to the sludge distribution pipe and one comprised in the side wall opposite of the sludge distribution pipe, thereby improving even sludge distribution and eddy current breaking at the top of the tank. Preferably, the overflow channel is sized at 0.2-1.5 m/s liquid overflow, more preferably between about 0.5-1 m/s liquid. Further, the overflow channel is preferably sized at about 2-40 m/s exhausted air (from the gas dispersing device(s)), more preferably between about 5-20 m/s exhausted air. The nature of the channel also provides a liquid drop, which is used to entrain produced foam by turbulently mixing the overflow liquid with the unwanted produced foam.

The tank of the invention comprises a floor or bottom wall having a slope. Herein, this wall having a slope is also indicated as "slope". Different kinds of slopes may be used. There are generally two conditions for this slope. The main condition is that the slope is arranged such that, when the tank is in use and liquid to be purified is provided through the openings of the sludge distribution pipe, the direction of the flow of the liquid spurting from the distribution pipe is changed. This can e.g. be done with a bottom having a lower height under the sludge distribution pipe and a higher height at increasing distance of the sludge distribution pipe. Preferably, the slope is arranged such that a circular turbulency pattern is obtained. In case a drain is provided in the floor or at a small height (< about 20 cm) above the floor, the slope is arranged such that the floor is lower at the drain and the height of the floor substantially increases with increasing distance from the drain, preferably in an area within a range of 70° or more. For example, in case a drain is present in the floor in a corner of the floor, the floor will preferably increase in height in an area of substantially 90°, whereas when the drain is further removed from the side wall, the drain may be the lowest point of the tank (when in use), thereby providing a bottom with a slope in an area of substantially 360°. The slope may comprise a number of slopes, e.g. a bottom with a number of surfaces all having an increasing height with increasing distance from a drain. The slope may in a preferred embodiment be arranged in the direction of a body diagonal. For example, this may be a flat surface, having a height 0 at the drain (or at one of the corners of the bottom of the tank) and having a height larger than 0 at the substantially vertical edge most remote from the spot with height 0. Preferably, the wall with slope, more preferably the floor with slope, comprises one or more flat surfaces with one or more slopes, respectively. However, the wall with slope may also be curved. In yet a more preferred embodiment, the slope of the floor having a slope is between 0.2:100 and 5:100, i.e. per each meter, the increase in height is between 0.5-5 cm. More preferably, the slope is between 0.5:100 and 2:100. An inclined floor, especially a diagonally inclined floor, enables turbulence during sludge feed. Further, an inclined floor, especially a diagonally inclined floor to a single drainage point under, e.g. under the distribution pipe, facilitates perfect draining e.g. during membrane cleaning procedures.

In a preferred embodiment, the flow by which the liquid is provided to the membrane filtration tank, the flow by which the permeate is withdrawn and the flow by which at least part of the liquid is removed as overflow are adjusted such that the mixing energy of the liquid in the tank is between 5 and 50 W/m³ without aeration, preferably 10 and 50 W/m³ and larger than 80 W/m³ with aeration, preferably larger than 100 W/m³, e.g. 100-500 W/m³.

In another preferred embodiment, the tubes for supplying gas to the gas-dispersing devices is arranged within the overflow channel, or more specifically, within the overflow chamber that may be formed by the overflow channel, a side wall and where present a hatch. As described above, gas, especially air can be provided in different ways: continuous, oscillated, pulsed, or cycled. The tubes for supplying the gas can be arranged on one side or on both sides. The tubes may be relatively large (i.e. a diameter 10 - 100 cm) due to high volumetric flows required and thereby require a relatively large space (i.e. lost space). The incorporation of the tubes in or just above the overflow chamber saves 50% of the required pipe space. The tube may in an embodiment also be used as a foam breaker in combination with the overflow weir. Air connections to the modules can be flexible cam-lock fittings or fixed flanged joints. The connections between the tube and the membrane module are preferably above the static water level in the filtration tank to avoid siphoning. The gas supply tube is preferably sized between about 5-30 m/s gas flow, preferably between about 10-15 m/s. The connection to the modules are fixed by the module supplier and are often sized at about 20-30 m/s.

Advantageously, with the tank and process of the invention, mixing is even and turbulent without excessive energy input. Due to the even and uniform sludge distribution, dead spots (no turbulency or circulation) do not occur and the membranes are loaded with the same solids flux. All membrane surfaces have equal loading with sludge, which improves the use of the membranes and the efficiency of the process. Further, the tank construction eliminates the necessity to remove the membranes for cleaning. All cleaning procedures known to the person skilled in the art, like air scouring, back pulsing and relaxation, maintenance cleaning in situ, maintenance cleaning in air and full recovery cleaning are available within the design of the tank. Further, inspection of the membranes is simple and requires no lifting of the modules. Another benefit of the construction of the tank is that a wide selection of membranes can be used. The membrane filtration tank according to the invention is a generic or universal filtration tank. Thereby, one may use filtration membranes of (nearly) any supplier and interchangeability of membranes is facilitated, which is unique for submerged filtration membranes.

In the invention "bottom" or "floor" refers to the surface or wall that is at the bottom when the tank is used. Herein, length and width are interchangeable. The terms "front", "side" and "back", "left" and "right" walls are interchangeable, and are only used to help understanding the invention as described herein and as depicted in the figures. The tank may be square (top view), such that length and width are equal. A square or rectangular shape (top view) is assumed. However, the tank may have rounded corners or may even have a round or elliptical shape. Then, length and width are replaced by diameter, or by longest and smallest diameter, respectively.

### Embodiments

### Embodiment 1

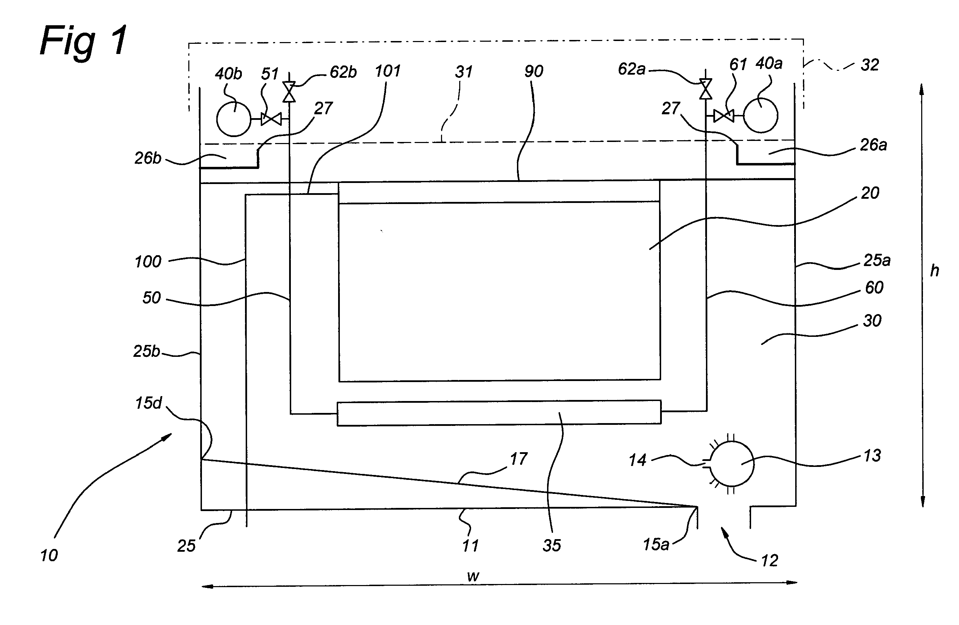

Figure 1 schematically depicts in a front view an embodiment of the membrane filtration tank according to the invention.

Membrane filtration tank 10 in figure 1 comprise a submerged filtration membrane 20. Only one submerged filtration membrane 20 is depicted in this front view, but more than 1 submerged filtration membranes 20 may be present. In the membrane filtration tank, the submerged filtration membrane 20 is connected to a effluent pipe 100 via pipe 101. The permeate, i.e. filtered liquid, substantially free of solid particles is pumped away from the membrane 20 by a pump (not shown). The submerged filtration membrane 20 may be one known from the art, e.g. flat plate submerged membranes, hollow fibre submerged membranes, capillary membranes etc., having pore sizes in the order of 0.003-10 µm. Providers of such membranes are e.g. Kubota, Mitsubishi, Norit Membrane Technology, Seghers-Toray, Zenon etc. Further, a gas-dispersing device 35 is schematically depicted in figure 1. Gas-dispersing device 35 is connected by a first tube 50 to a gas supply 40 (not shown in this figure, and may also be connected to tube 60 (second tube), also connected to gas supply 40 (not shown). Further, tube 50 may comprise a valve 51 (first valve) and tube 60 may comprise a valve 61 (second valve). In a variation on this embodiment, there is further provided a flush valve 62a, connected to tube 60 and a flush valve 62b, connected to tube 50. Gas-dispersing device 35 is connected to a gas supply means 40 via tubes 60 and 50, which are connected to gas-supply tubes 40a and 40b, respectively. Gas-supply tubes 40a and 40b receive gas from gas supply means 40. Submerged filtration membrane 20 and gas-dispersing device 35 may be integrated in one membrane module or membrane unit. The membrane or membrane module 20 is positioned in tank 10 by a supporting means 90. This may e.g. a hang frame or a standing frame, or a combination thereof, etc. Figure 1 depicts a hang frame 90.

Further, there is provided a sludge distribution pipe 13, close to bottom 11 and close to the left wall 25a. This sludge distribution pipe 13 has one or more openings or nozzles 14 to provide liquid 30 to tank 10. As depicted here, the one or more openings 14 of sludge distribution pipe 13 is located at a distance within ¼ of the width w from tank 10 from wall 25a. Sludge distribution pipe 13 is substantially horizontal and runs parallel with floor 11 and wall 25a, and is closest to wall 25a. Opening or nozzle 14 is located in such a way as to promote (maximum) turbulency in liquid 30 in tank 10. Referring to figure 1, the opening 14 may preferably be positioned in a range of about -90 to 90° with respect to opening 14 in pipe 13, as indicated in the figure.

The tank further comprises a wall 25 surrounding tank 10. In this figure, and in the following figures, a square or rectangular thank is schematically depicted. In figure 1, tank 10 comprises a right wall 25a and a left wall 25b. Wall 25 at least partially comprises an overflow channel 26 for collecting liquid 30 from tank 10. In a variant, at least part of the wall 25b opposite the sludge distribution pipe 13 comprises an overflow channel 26b. In the embodiment of figure 1, both walls 25a and 25b comprise such an overflow channel or gutter 26. They are indicated as overflow channel 26a and 26b, respectively. The process of purification according to the invention is performed in such a way that liquid 30 is provided by sludge distribution pipe 1 to tank 10 and a height of the liquid 30 in tank 10 is maintained above the lower edge of overflow channel 26 (in figure 1: channels 26a and 26 b), i.e. the surface 31 of liquid 30 is higher than the lower edge of channel 26. Due to slope 17 of the bottom and the overflow of liquid 30 to overflow channel 26, a turbulence is created in the liquid. Liquid removed by the overflow may be reintroduced in tank 10.

The tank further comprises a bottom 11, having a slope 17. In the embodiment of figure 1, the slope is (increasing) towards the left wall 25b. For example, the slope 17 of the bottom is between 0.2:100 and 5:100. For example, assuming a width of 4m, the height difference between the bottom 17 at right wall 25a and bottom 17 at left wall 25b is between 0.8 and 20 cm.

In figure 1, tank 10 further comprises a tank drain 12. This tank drain 12 is at the lowest point of bottom 17. Preferably, the slope 17 starts from tank drain 12, e.g. from the edge of this tank drain or in a vicinity of this drain of about 0-50 cm, indicated by point 15a, towards point 15d at the left side of the tank, i.e. where slope 17 is connected to wall 25b. Preferably, when a tank drain 12 is present, slope 17 does not start in the edge of bottom 11 and wall 25a closest to tank drain 17 but starts from the edge of tank drain 12. Tank drain 17 is preferably close to a side wall (25a) and preferably arranged under sludge distribution pipe 13.

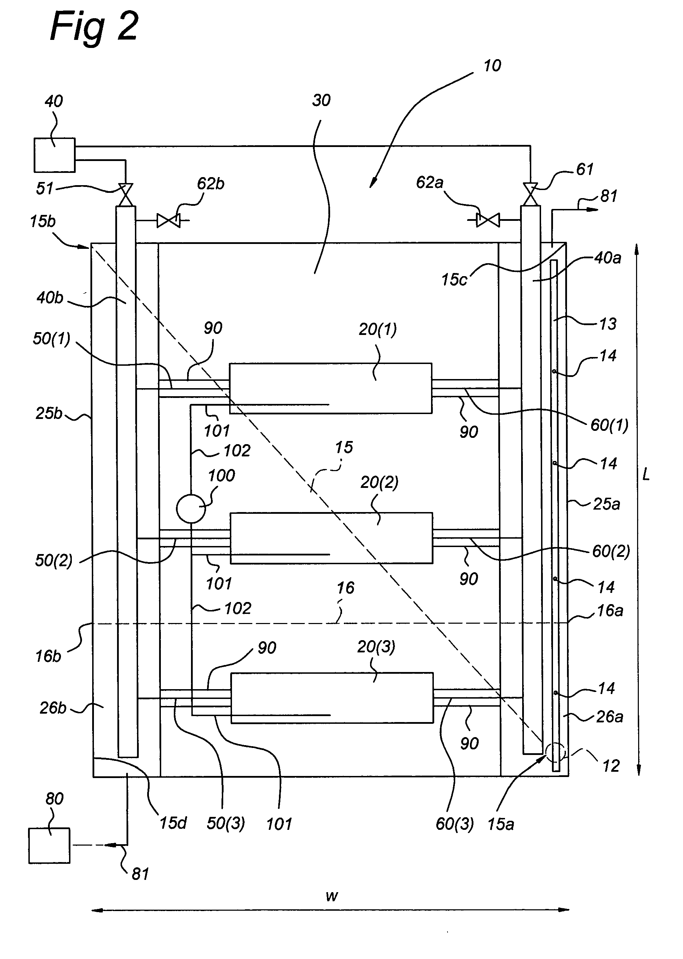

Figure 2 schematically depicts in a top view an embodiment of the membrane filtration tank according to the invention as depicted in figure 1. Figure 2 depicts by way of example three membrane modules (20(1), 20(2) and 20(3), respectively). The gas-dispersing devices 35 are not depicted in this figure, but the tubes connected to the gas-dispersing devices 35 for providing gas are indicated by reference numbers 50(1), 50(2), 50(3) and 60(1), 60(2), 60(3), respectively. These tubes 50(1), 50(2), 50(3) and 60(1), 60(2), 60(3) may be integrated in or provided on or next to hang frame 90, or may be at least partially arranged above the surface of the liquid, in order to prevent siphoning. Permeate is withdrawn from membrane modules 20 through connection tubes 101, permeate header 102 and effluent pipe 100, respectively. In this embodiment, permeate pipe 100 is a vertical pipe, located in the middle of tank 10, and preferably with equal numbers of membrane modules 20 at both sides (not in this schematic drawing). Effluent pipe 100 is preferably within a distance of a tank wall 25, in this embodiment tank wall 25b, of ¼ of the width w and may be positioned under overflow channel 26a or 26a

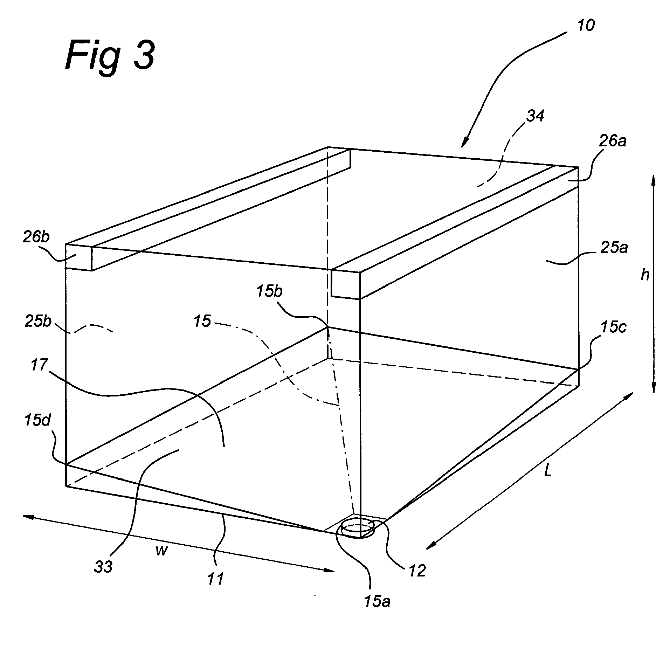

In this figure, gas supply means 40 is shown, providing gas to gas-supply tubes 40. Further, in this figure a drain 12 is drawn, as dotted line, in the lower corner of tank wall 25a and the front wall. Preferably, this drain is at bottom 11 (or at the lower half of slope 17). In the embodiment as depicted in figure 2, the drain is at a distance ¼ of the width w of tank wall 25a and at within a distance ¼ of the length w of the front wall (reference number 33 in figure 3) of tank 10. Further, drain 12 is provided below sludge distribution pipe 13 with holes 14.

Figure 2 shows two embodiments of slope 17, indicated in figure 2 with reference number 15 and 16. Reference number 16 describes a slope of bottom 17, starting from a wall 25a or close to wall 25a, as indicated with reference number 16a. From 16a the bottom 17 of tank 11 starts to incline, such that the bottom 17 at wall 25b, indicated with reference number 16b, is higher than the bottom 17 at wall 25a. For example, assuming a width of 4m, the height difference between the bottom 17 at right wall 25a and bottom 17 at left wall 25b is between 0.8 and 20 cm. This embodiment is also schematically depicted in figure 1. Note that in figure 1 the bottom 17 starts to incline from reference number 15a, which is the edge or close to the edge of drain 12, and the height at wall 25b is indicated with 15d. Generally, the onset of the slope is at a distance within ¼ of the width of wall 25a.

The tubes 40 for supplying gas to the gas-dispersing devices 35 is arranged within the overflow channel 26, or more specifically, within the overflow chamber that may be formed by the overflow channel 26, a side wall 25 and where present a hatch 32. The tube 40 may also be used as a foam breaker in combination with the overflow weir 27.

### Embodiment 2

Figure 3 schematically depicts in a front/side view an embodiment of the membrane filtration tank 10 according to the invention as depicted in figures 1 and 2, wherein floor 17 has a diagonally inclined floor. In figures 2 and 3 this is indicated with line 15. Line 15 starts at the corner of bottom 11, the front wall 33 and side wall 25a and inclines to the opposite edge (formed by side wall 25b and back wall 34). The contact point of bottom 17 with the opposite edge is indicated with reference number 15b.

In the embodiment of figures 2 and 3, there is further a drain 12 provided. Drain 12 is within a distance ¼ of the width w of tank wall 25a and at within a distance ¼ of the length 1 of the front wall of tank 10. Preferably, drain 12 is arranged at the lowest point of bottom 17, such that sludge can easily be removed by drain 12. Hence, in the embodiment of figures 2 and 3, the diagonally inclined floor starts with its slope(s) from the edge of drain 12. This is indicated with the lines between reference points 15a-15d, 15a-15b and 15a-a5c, respectively (This diagonally inclined bottom may be described as provided by a virtual process wherein a flat bottom 11 is moved upwards along the edge formed by side wall 25b and back wall 34, thereby providing a slope 17 as depicted in figure 3). Assuming a length of 15 m and a width of 3 m, the diagonal is about 15.3 m. Hence, reference number 15b will be found at a height h between about 3.06 cm (0.2:100) and 76.5 cm (5:100) above bottom 11. Reference number 15d and 15c will be found at heights between about 0.6 and 15 cm and between about 3.0 and 75 cm, respectively. In this way, a diagonally inclined floor is obtained, which leads to a kind of cork screw driver turbulency. This screw turbulency and tank configuration has been given the name of Nautilus for simplicity.

### Embodiment 3

Referring to figure 2, a specific embodiment of the permeate header 102 is described. The permeate header 102 in tank 10 can provide further process advantages. The central header that transports permeate to the permeate pump is set in the middle of the longest side of the tank for tanks >9m long. Nautilus configurations of less than 9m long can have one single permeate header that runs the length of the modules and mounted at less 5 cm under the static water level and are inclined with a 10% gradient to the central collection header (or to the end of tank 10 in smaller systems). At the central point the header 102 increases size to facilitate air separation. This air separation device is effectively a larger pipe diameter with a suitable dead volume that extends above the static water level in the tank. This pipe has a small exhaust pipe with an automatic valve that periodically purges the air out of the permeate system. In plates systems the static water pressure is used to purge the air during relaxation modes, and in fibre systems the back flushing of the membrane is used to force the air out. The permeate piping is sized at 0.5 to 1 m/s during permeate extraction mode.

The description above is intended to be illustrative, not limiting. Thus, it will be apparent to one skilled in the art that modifications may be made to the invention as described without departing from the scope of the claims set out below. The drawings usually only comprise the important elements and features that are necessary to understand the invention. Beyond that, the drawings are schematically and not on scale. The invention is not limited to those elements, shown in the schematic drawings since more elements may be present, as will be known to the person skilled in the art.

## Claims

1. A membrane filtration tank (10) comprising:
a) one or more filtration membranes (20), connected to an effluent pipe (100);
b) one or more sludge distribution pipes (13) having one or more openings (14) to provide liquid (30) to the tank (10);
c) one or more overflow channels (26) for collecting liquid (30) from the tank (10);
d) a floor (11) having a slope (17).

2. The membrane filtration tank (10) according to claim 1, wherein the one or more openings (14) of the one ore more sludge distribution pipes (13) are located at a distance within ¼ of the width (w) of tank (10) from one of the side walls (25) of the tank (10).

3. The membrane filtration tank (10) according to claim 2, wherein at least part of a wall (25b) opposite the sludge distribution pipe (13) comprises an overflow channel (26b).

4. The membrane filtration tank (10) according to claim 2 or 3, wherein at least part of a wall (25a) located at a distance within ¼ of the width (w) from tank (10) from the sludge distribution pipe (13) comprises an overflow channel (26a).

5. The membrane filtration tank (10) according to one of claims 1-4, wherein the slope (17) of the floor (11) is between 0.2:100 and 5:100.

6. A process for filtering a liquid (30) comprising:
a) feeding the liquid (30) to be filtered to a membrane filtration tank (10) according to one of claims 1-5;
b) withdrawing permeate from the one ore more submerged filtration membranes;
c) removing at least part of the liquid (30) by means of overflow into one or more overflow channels (26).

7. The process according to claim 6, wherein the flow by which the liquid (30) is provided to membrane filtration tank (10), the flow by which the permeate is withdrawn and the flow by which at least part of the liquid (30) is removed as overflow are adjusted such that the mixing energy of the liquid in the tank (10) is between 5 and 50 W/m³ without aeration and larger than 80 W/m³ with aeration.

## Amended claims

### Amended claims in accordance with Rule 86(2) EPC.

**1.** A membrane filtration tank (10) comprising:
a) one or more filtration membranes (20), connected to an effluent pipe (100) for pumping away permeate;
b) one or more sludge distribution pipes (13) having one or more openings (14) to provide liquid (30) to the tank (10);
c) one or more overflow channels (26) for collecting liquid (30) from the tank (10);
d) a diagonally inclined floor (11) having a slope (17).

**2.** The membrane filtration tank (10) according to claim 1, wherein the one or more openings (14) of the one ore more sludge distribution pipes (13) are located at a distance within ¼ of the width (w) of tank (10) from one of the side walls (25) of the tank (10).

**3.** The membrane filtration tank (10) according to claim 2, wherein at least part of a wall (25b) opposite the sludge distribution pipe (13) comprises an overflow channel (26b).

**4.** The membrane filtration tank (10) according to claim 2 or 3, wherein at least part of a wall (25a) located at a distance within ¼ of the width (w) from tank (10) from the sludge distribution pipe (I3) comprises an overflow channel (26a).

**5.** The membrane filtration tank (to) according to one of claims 1-4, wherein the slope (17) of the floor (11) is between 0.2:100 and 5:100.

**6.** The membrane filtration tank (10) according to one of claims 1-S, having a diagonally inclined floor to a single drain (12).

**7.** The membrane filtration tank (10) according to one of claims 1-6, having a drain (1.2) within a distance ¼ of width (w) of the tank wall (25a) and within a distance ¼ of the length (1) of the front of tank 10.

**8.** A process for filtering a liquid (30) comprising:
a) feeding the liquid (30) to be filtered to a membrane filtration tank (10) according to one of claims 1-7;
b) withdrawing permeate from the one ore more submerged filtration membranes;
c) removing at least part of the liquid (30) by means of overflow into one or more overflow channels (26).

**9.** The process according to claim 8, wherein the flow by which the liquid (30) is provided to membrane filtration tank (10), the flow by which the permeate is withdrawn and the flow by which at least part of the liquid (30) is removed as overflow are adjusted such that the mixing energy of the liquid in the tank (10) is between 5 and 50 W/m³ without aeration and larger than 80 W/m³ with aeration.
